(19) **Europäisches Patentamt / European Patent Office / Office européen des brevets**

(11) **EP 1 224 995 B1**

(12) **EUROPEAN PATENT SPECIFICATION**

(45) Date of publication and mention
of the grant of the patent:
**20.02.2008 Bulletin 2008/08**

(51) Int Cl.:
*B23K 9/067* *(2006.01)*   *B23K 9/073* *(2006.01)*
*B23K 9/09* *(2006.01)*   *B23K 9/095* *(2006.01)*
*B23K 9/173* *(2006.01)*

(21) Application number: **98961569.5**

(22) Date of filing: **24.12.1998**

(86) International application number:
**PCT/JP1998/005923**

(87) International publication number:
**WO 2000/038870 (06.07.2000 Gazette 2000/27)**

(54) **Arc welding method and device**

Lichtbogenverfahren und -einrichtung

Procédé et dispositif de soudage à l'arc

(84) Designated Contracting States:
**SE**

(43) Date of publication of application:
**24.07.2002 Bulletin 2002/30**

(73) Proprietors:
• **Matsuo, Kojun**
**Kashiba-shi,**
**Nara 639-0252 (JP)**
• **Kim, You-Chul**
**Suite-shi,**
**Osaka 564-0043 (JP)**

(72) Inventors:
• **KIM, You-Chul**
**Suita-shi,**
**Osaka 564-0043 (JP)**
• **ORSZAGH, Peter**
**841 04 Bratislava (SK)**

(74) Representative: **Andersson, Per Rune**
**Albihns Göteborg AB**
**Box 142**
**401 22 Göteborg (SE)**

(56) References cited:
**JP-A- 8 229 680**   **JP-A- 11 019 769**
**JP-A- 57 081 964**   **JP-A- 59 199 173**
**JP-A- 59 202 176**   **US-A- 3 792 225**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to an welding method and to an are welding device according to the preamble of, respectively, claims 1 and 8, (see, for example, JP 59/202176 A) in which a welding wire is used.

BACKGROUND ART

An arc welding method has been known as a method for subjecting a metallic work to welding. In this welding method, a welding wire is brought into contact with the work with application of a voltage between the welding wire and the work, so that the tip of the welding wire, which is fused by the energization at that time, is fixingly welded to the work. Thereafter, the welding wire is separated from the work in the state in which the tip of the welding wire is fused. And then, the welding wire is allowed to face a next welding portion on the work, and thus, sequentially subjects the next welding portion to similar welding.

Since in the above-described arc welding method, the voltage is continuously applied to the welding wire during a series of welding processes, the tip of the welding wire may burst at the instant when the welding wire is separated from the work. The bursting tip of the welding wire comes into molten particles, which are then expelled over the work. As a result, there is a danger that spatters generated on the work degrade the appearance or finished quality of the welding portion and its surroundings.

It has been known that supplying various kinds of gases such as carbonic acid gas and mixed gas of carbonic acid gas and argon gas to the welding portion is normally effective in suppressing the above-described generation of the spatters. However, use of such gas induces an increase in welding cost, and further, the use quantity will be possibly restricted in the future from the viewpoint of environmental protection according to the kind of used gas. JP 59-202176 and JP 57-81964 teach prior art.

An object of the present invention is to suppress generation of spatters while decreasing the use quantity of gas to be supplied to a welding portion in an arc welding method.

DISCLOSURE OF THE INVENTION

An arc welding method according to the present invention is a method for subjecting a work to welding by the use of a welding wire. This arc welding method comprises the steps of: bringing the welding wire into contact with the work while applying a voltage between the welding wire and the work, thereby causing the end of the welding wire to be fixingly welded to the work; obtaining an electric resistance between the welding wire and the work during the contact between the welding wire and the work, so as to detect a minimum of the electric resistance; and temporarily stopping the application of the voltage between the welding wire and the work after the detection of the minimum of the electric resistance.

For example, a voltage value and a current value between the welding wire and the work are measured, and thus, the electric resistance between the welding wire and the work is obtained based on the voltage value and the current value.

Furthermore, the application of the voltage between the welding wire and the work is temporarily stopped when, for example, a predetermined time is elapsed after the above-described minimum of the electric resistance is detected. The predetermined time here signifies, for example, a time required such that the electric resistance between the welding wire and the work reaches an electric resistance obtained by adding an electric resistance of 10% or more and 98% or less of a difference between a previously obtained maximum of the electric resistance between the welding wire and the work and the above-described minimum to the above-described minimum. Otherwise, the predetermined time is, for example, 0.5 ms.

Alternatively, the application of the voltage between the welding wire and the work is temporarily stopped when, for example, the electric resistance between the welding wire and the work is increased up to a predetermined electric resistance after the above-described minimum of the electric resistance is detected. The predetermined electric resistance here signifies, for example, an electric resistance obtained by adding an electric resistance of 10% or more and 98% or less of a difference between a previously obtained maximum of the electric resistance between the welding wire and the work and the above-described minimum to the above-described minimum.

Incidentally, the time when the application of the voltage between the welding wire and the work is temporarily stopped is, for example, 0.25 ms.

In the above-described arc welding method according to the present invention, the end of the welding wire to be fixingly welded to the work performs the required welding with respect to the work. In this welding procedure, when the application of the voltage between the welding wire and the work is temporarily stopped after the minimum electric resistance between the welding wire and the work is detected, the welding wire hardly bursts at the tip thereof. As a result, molten particles are hardly expelled from the welding wire over the work, thereby effectively suppressing generation of spatters on the work.

Moreover, an arc welding device according to the present invention is a device for subjecting a work to welding by the use of a welding wire. This arc welding device comprises: means for applying a voltage between the welding wire and the work; means for moving the welding wire in such a manner as to bring it into contact with the work; means for obtaining an electric resistance between the welding wire and the work during the contact between the welding wire and the work, so as to detect a minimum of the electric resistance; and means for temporarily stopping the application of the voltage between the welding wire and the work after the detection of the minimum of the electric resistance.

In the above-described arc welding device according to the present invention, the welding wire is moved to be brought into contact with the work. As a result, the welding wire is fused by the voltage applied between the welding wire and the work, so that the work is subjected to the required welding. When the application of the voltage between the welding wire and the work is temporarily stopped after the minimum electric resistance is detected during the contact between the welding wire and the work, the welding wire hardly bursts at the tip thereof. As a result, molten particles are hardly expelled from the welding wire over the work, thereby effectively suppressing generation of spatters on the work.

Other objects and effects of the present invention will be obvious from the detailed description given below.

BRIEF DESCRIPTION OF THE DRAWINGS

Fig. 1 is a schematic view showing a gas-metal arc welding device in a preferred embodiment according to the present invention;

Fig. 2 is a diagram illustrating the schematic configuration of a controller for use in the gas-metal arc welding device;

Fig. 3 is part of a flowchart illustrating the control of the gas-metal arc welding device;

Fig. 4 is part of a flowchart illustrating the control of the gas-metal arc welding device;

Fig. 5 is part of a flowchart illustrating the control of the gas-metal arc welding device;

Fig. 6 is part of a flowchart illustrating the control of the gas-metal arc welding device;

Figs. 7 illustrates a welding procedure by the gas-metal arc welding device;

Fig. 8 is a graph illustrating variations of an electric resistance between a welding wire and a work in the welding procedure; and

Fig. 9 is part of a flowchart illustrating the control of a gas-metal arc welding device in a modification according to the present invention.

DETAILED DESCRIPTION OF THE INVENTION

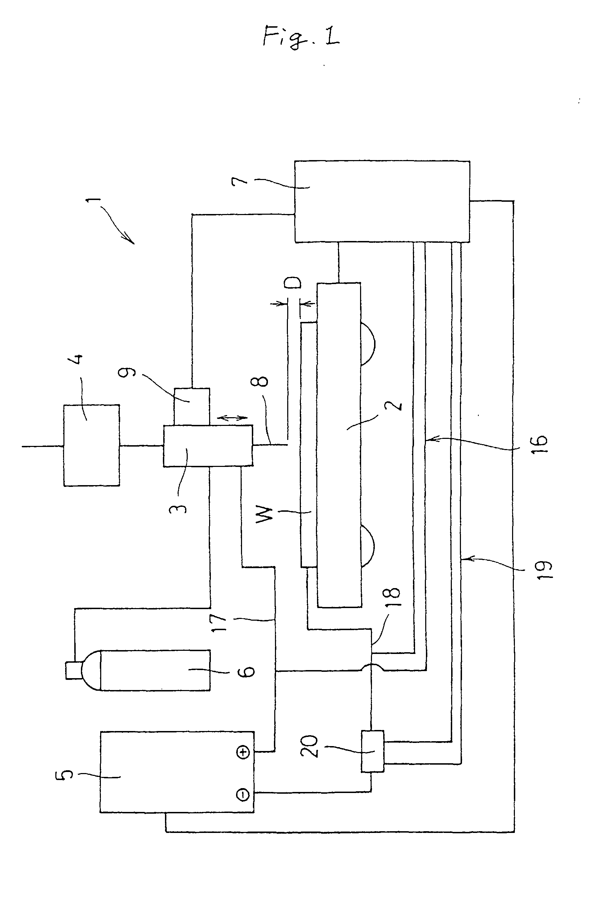

Referring to Fig. 1, a description will be given of a welding device which carries out a gas-metal arc welding method in a preferred embodiment according to the present invention. In Fig. 1, a gas-metal arc welding device 1 comprises mainly a carrier 2, a torch 3, a wire feeder 4, a power source 5, a carbonic acid gas cylinder 6 and a controller 7.

The carrier 2 is adapted to mount thereon a work W to be welded, and it is configured in such a manner as to be moved leftward in Fig. 1 at a constant speed by a moving device, not shown.

The torch 3 is disposed above the carrier 2, and holds therein a welding wire 8 for subjecting the work W to welding. The welding wire 8 held by the torch 3 extends downward in Fig. 1, i.e., toward the carrier 2, to thus face the work W mounted on the carrier 2. Here, the welding wire 8 is a metallic wire for welding, which is commercially available.

The above-described torch 3 is provided with a motor 9. The motor 9 serves to move the torch 3 in a vertical direction. Specifically, the motor 9 is configured such that the torch 3 is moved downward when the motor 9 is rotated forward, whereas the torch 3 is moved upward when the motor 9 is rotated reversely.

Furthermore, the torch 3 is provided with a gas jetting port, not shown, in the vicinity of an outlet for the welding wire 8 extending toward the work W. The gas jetting port is configured such that gas (carbonic acid gas) can be jetted in such a manner as to envelop the welding wire 8 projecting from the torch 3 and can be sprayed toward the work W.

The wire feeder 4 is adapted to feed the welding wire 8 toward the torch 3. The wire feeder 4 is configured in such a manner as to feed out the welding wire 8 at a constant speed.

The power source 5 is used to apply a voltage between the work W mounted on the carrier 2 and the welding wire 8 held by the torch 3. A positive electrode of the power source 5 is connected to the welding wire 8 via the torch 3; in contrast, a negative electrode thereof is connected to the work W. Here, a power source of a type which can be turned on or off by, for example, electronic control is used as the power source 5.

The carbonic acid gas cylinder 6 is connected to the torch 3, thereby supplying the carbonic acid gas which is jetted from the gas jetting port of the torch 3.

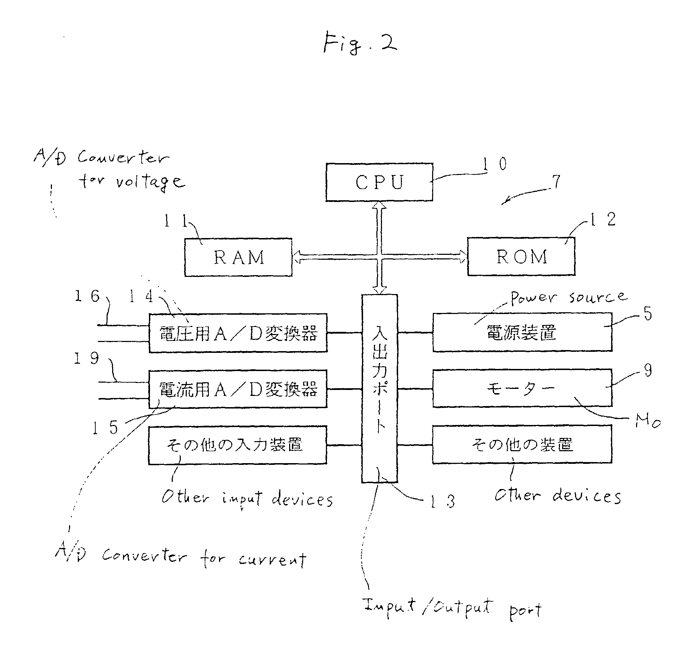

The controller 7 controls operation of the gas-metal arc welding device 1. As illustrated in Fig. 2, the controller 7 comprises a central processing unit (CPU) 10 governing the control, a random access memory (RAM) 11 for storing various kinds of data therein, a read-only memory (ROM) 12 in which a control program is recorded, and an input/output port 13. To the input of the input/output port 13 are connected not only an A/D converter 14 for a voltage and an A/D converter 15 for a current but also other input devices such as a keyboard by which an operator inputs predetermined information or processing commands or the like. In contrast, to the output of the input/output port 13 are connected the power source 5, the motor 9 and the other devices such as the wire feeder 4 and the carrier 2.

The A/D converter 14 for a voltage is connected to a voltage measuring circuit 16 (see Fig. 1) for measuring a voltage value when the welding wire 8 and the work W are electrically conducted to each other. The voltage measuring circuit 16 is connected at one end thereof to a power source circuit 17 for connecting the power source 5 to the torch 3 and at the other end thereof to another power source circuit 18 for connecting the work W to the power source 5. In consequence, the voltage measuring circuit 16 is connected in parallel to a series of power source circuits consisting of the power source circuits 17 and 18.

In contrast, the AID converter 15 for a current is connected to a current measuring circuit 19 (see Fig. 1) for measuring a current when the welding wire 8 and the work W are electrically conducted to each other. The current measuring circuit 19 is branched from a shunt resistance 20 disposed in the power source circuit 18. Consequently, the current measuring circuit 19 is connected in series to the power source circuit 18.

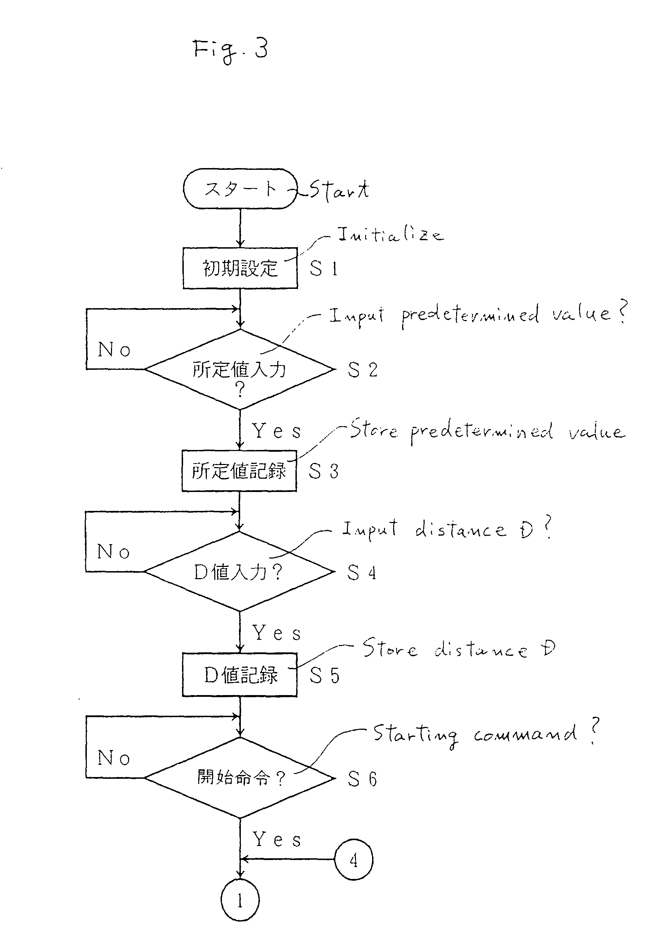

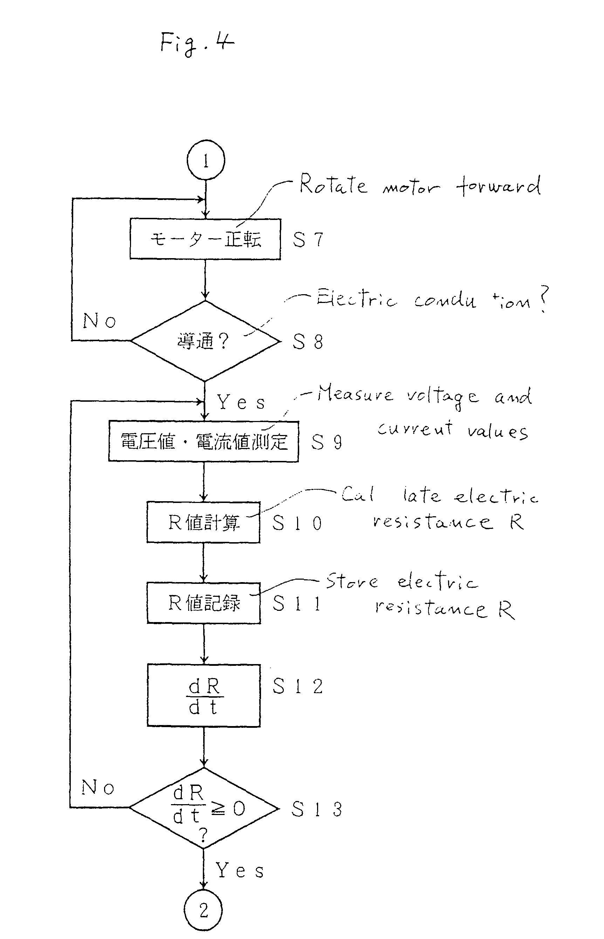

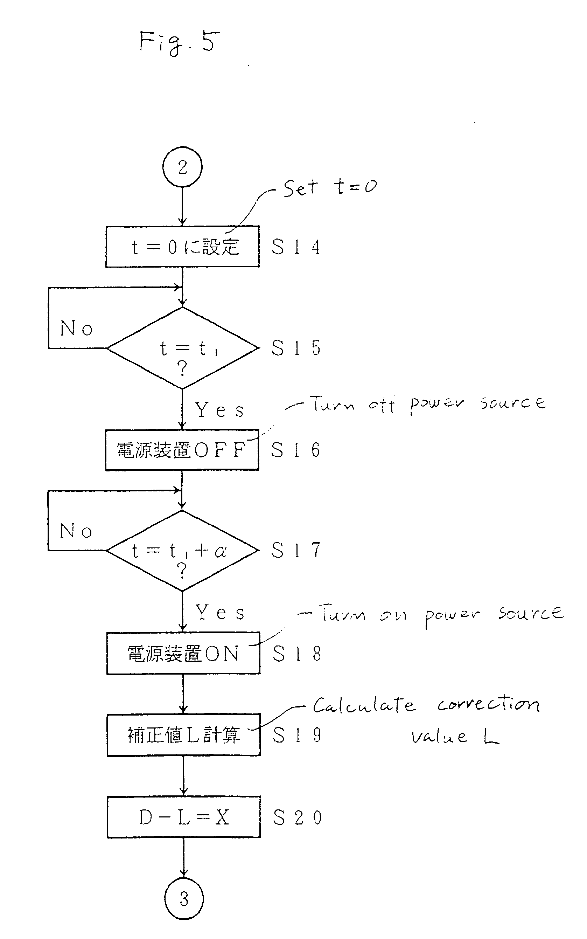

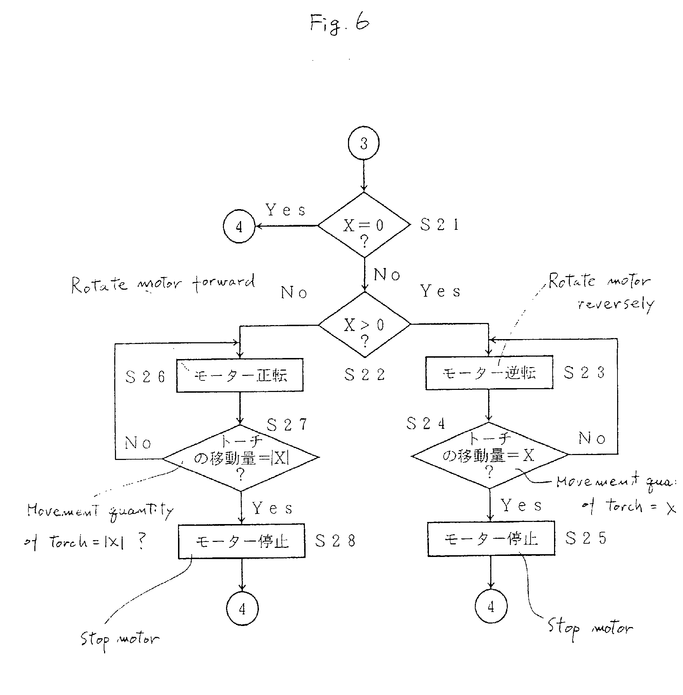

Next, explanation will be made on an arc welding method in which the gas-metal arc welding device 1 is used. Here, welding operation by the above-described gas-metal arc welding device 1 will be explained in reference to control flowcharts illustrated in Figs. 3 to 6.

When an operator turns on the power source of the gas-metal arc welding device 1, initialization is first performed in step S1 in accordance with a control program such that the carrier 2 is set at an initial position, the power source 5 is operated or the like. At this time, carbonic acid gas is started to be supplied from the carbonic acid gas cylinder 6 to the torch 3.

Subsequently, in step S2, the operator is expected to input a predetermined value in accordance with the program. Here, the predetermined value signifies the cross-sectional area S or material constant C of the welding wire 8. Incidentally, the material constant C is a constant inherent to a metallic material constituting the welding wire 8. When the operator inputs a required predetermined value, the control routine proceeds from step S2 to step S3 in accordance with the program, and then, various kinds of input predetermined values are stored in the RAM 11.

After step S3, the operator is expected to input an optimum distance D (see Fig. 1) between the welding wire 8 and a portion to be welded on the work W in step S4 in accordance with the program. The optimum distance D depends on the type of the welding wire 8 or the work W, and therefore, it can be appropriately set by the operator. When the operator inputs the optimum distance D, the optimum distance D is stored in the RAM 11 in step S5.

Next, in step S6, the operator is expected to input a welding starting command in accordance with the program. When the operator inputs the welding starting command, the control routine proceeds to step S7 in accordance with the program, and then, the motor 9 is rotated forward. Consequently, the torch 3 holding the welding wire 8 therein is moved downward in Fig. 1, i.e., toward the work W. When the movement of the torch 3 brings the tip of the welding wire 8 into contact with the portion to be welded on the work W, the welding wire 8 is electrically conducted to the work W. In accordance with the program, the conducted state is confirmed in step S8 in response to an electric signal generated by the electric conduction, and further, the motor 9 is stopped. Thereafter, the control routine proceeds to step S9.

When the welding wire 8 and the work W are electrically conducted to each other in contact in the above-described manner, the current supplied from the power source 5 flows from the welding wire 8 to the work W, so that the portion to be welded on the work W is subjected to welding.

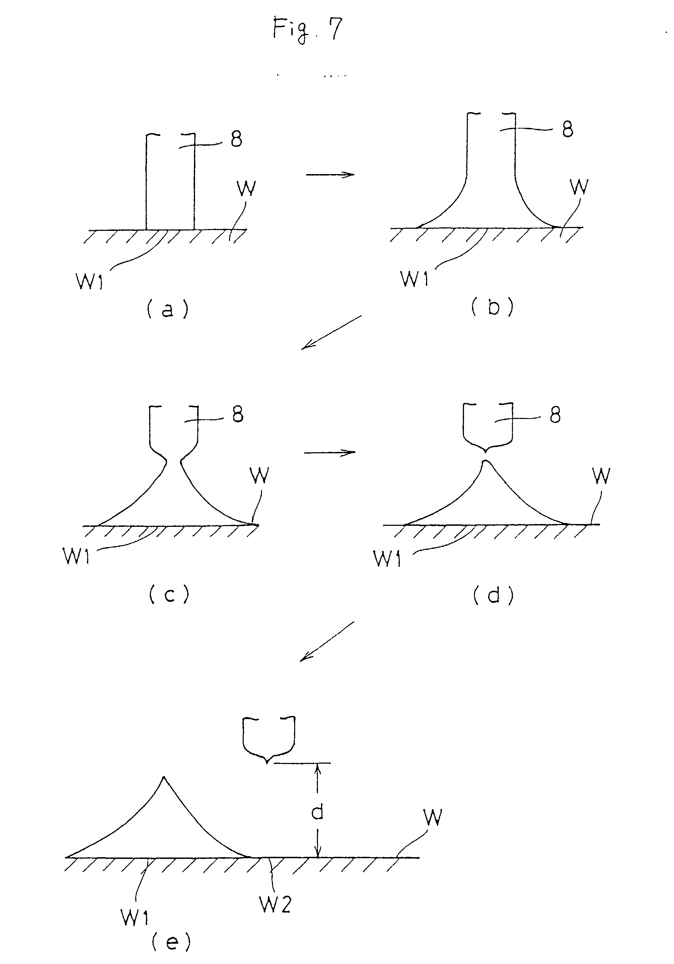

Referring to Fig. 7, a detailed description will be given of the state at the time of the above-described welding. First, as illustrated in Fig. 7(a), when the welding wire 8 is brought into contact with a portion W1 to be welded of the work W, the current flows between the welding wire 8 and the work W by the power source 5, so that the voltage is applied between the welding wire 8 and the work W. As a result, the tip of the welding wire 8 is heated to be molten, as illustrated in Fig. 7(b), diverges on the portion W1 to be fixingly welded owing to surface tension, and thus, is started to be welded to the portion W1 to be welded. If this state proceeds, the welding wire 8 undergoes necking, as illustrated in Fig. 7(c), and finally, the welding wire 8 is cut out to be separated from the work W, as illustrated in Fig. 7(d). In this manner, the portion W1 to be welded is subjected to the welding by the tip of the fixingly welded welding wire 8. Here, the tip of the welding wire 8 separated from the work W is disposed above a next portion W2 to be welded on the work W, as illustrated in Fig. 7(e) since the carrier 2 gradually moves leftward in Fig. 1.

In the above-described series of welding procedures, the voltage value and current value of the current flowing between the welding wire 8 and the work W are started to be measured from the beginning of the contact between the welding wire 8 and the work W in accordance with the program (step S9). Here, the voltage value is measured by converting the voltage value in the voltage measuring circuit 16 into a digital signal by the A/D converter 14 for the voltage, and further, the current value is measured by converting the current value of the current flowing in the current measuring circuit 19 into a digital signal by the A/D converter 15 for the current.

Next, in step S10, an electric resistance R between the welding wire 8 and the work W is calculated based on the measured voltage and current values. In step S11, the calculated electric resistance R is stored, and further, in step S12, the electric resistance R is differentiated with a time. In next step S13, it is judged whether or not the differential value of the electric resistance R becomes 0 or more (i.e., a positive value). If the result in step S13 is judged to be "No", the control routine returns to step S9 in accordance with the program, and thereafter, the control routine from step S9 to step S13 is repeated until the result in step S13 is judged to be "Yes". During such repeated operation, the electric resistance R between the welding wire 8 and the work W is continuously measured, and finally, the latest electric resistance R is stored in step S11.

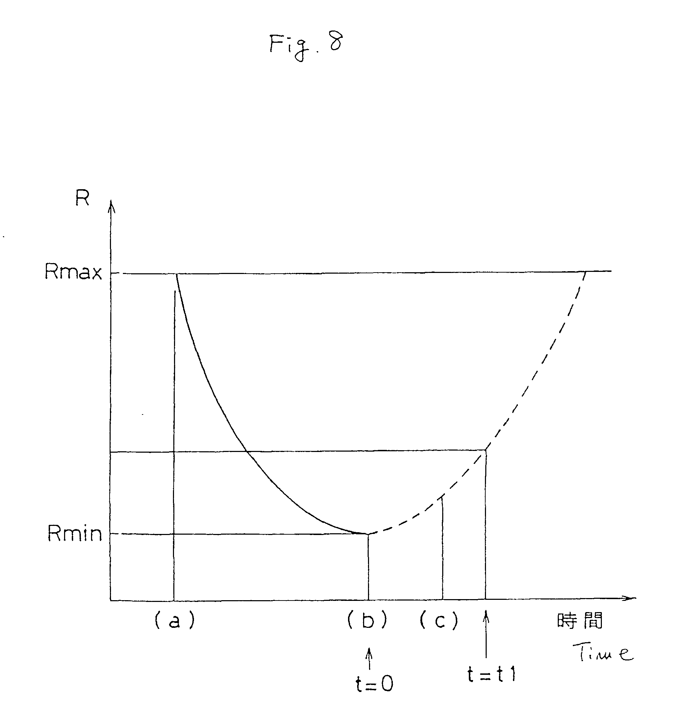

Now, explanation will be made on variations of the electric resistance R. As illustrated in Fig. 8, the electric resistance R gradually becomes smaller after the beginning of the contact between the welding wire 8 and the work W (that is, the time of the state illustrated in Fig. 7(a)), and it becomes smallest at the time when the welding wire 8 is melted without any necking and brought into contact with the work W at the greatest contact area (that is, the time of the state illustrated in Fig. 7(b)). When the welding wire 8 is started to undergo the necking (for example, the time of the state illustrated in Fig. 7(c)), the electric resistance R is gradually increased up to a maximum Rmax immediately before the tip of the welding wire 8 is separated from the work W. Consequently, the result in step S13 is judged to be "Yes" at the time when the electric resistance R transits from a decrease to an increase, i.e., at the time of a minimum Rmin of the electric resistance R. The minimum Rmin is stored in the RAM 11 in step S11.

In next step S14, a time (t) when the result in step S13 is judged to be "Yes" is set to 0 by an inside timer contained in the controller 7. In other words, when the electric resistance R is decreased down to the minimum Rmin, the time (t) is set to 0. Subsequently, in step S15, it is judged whether or not a lapse of time after the time (t) is set to 0 reaches a time t1. Here, the elapsed time t1 is assumed to be, for example, a time required for an increase in electric resistance R from the minimum Rmin by an electric resistance of 10% or more and 98% or less, preferably, 50% or more and 97% or less, more preferably, 75% or more and 95% or less of a difference between the minimum Rmin and the maximum Rmax (see Fig. 8). The elapsed time t1 is normally about 0.5 ms after the time at the minimum Rmin. Incidentally, the maximum Rmax signifies an electric resistance immediately before the welding wire 8 is separated from the work W, as described above, i.e., immediately before the electric resistance R becomes infinite, and it may be experimentally determined in advance to be stored in the controller 7.

If the result in step S15 is judged to be "Yes", the power source 5 is turned off in next step S16. Consequently, the application of the voltage between the welding wire 8 and the work W is stopped, and the tip of the welding wire 8 can be prevented from bursting when the welding wire 8 is separated from the work W (that is, in the state illustrated in Fig. 7(d)). As a result, molten particles from the welding wire 8 are hardly expelled over the work W, so that spatters are hardly generated. Even if the power source 5 is turned off as described above, the tip of the welding wire 8 is being molten by residual heat, and therefore, it can be naturally separated from the work W as the work W is moved by the carrier 2.

Subsequently, in step S17, it is judged whether or not the time t is further elapsed by $\alpha$, that is, whether or not the time t becomes 1+$\alpha$. Here, $\alpha$ is normally about 0.25 ms. If the result in step S17 is judged to be "Yes", the control routine proceeds to step S18 in accordance with the program, and then, the power source 5 is turned on again. In this manner, the voltage is applied again between the welding wire 8 and the work W, which then come into a weldable state.

In next step S19, a correction value L required for achieving the optimum distance D between the welding wire 8 and the work W is calculated based on a mathematical equation (1) below in accordance with the program. In the mathematical equation (1), Rmin represents the above-described minimum of the electric resistance R stored in step S11, and C and S represent the material constant and cross-sectional area of the welding wire 8, respectively, stored in step S3.

$$L = \frac{R\min \cdot S}{C} \qquad \cdots (1)$$

In step S20, the correction value L obtained in step S19 is subtracted from the optimum distance D stored in step S5, thereby calculating a difference X. In next step S21, it is judged whether or not the difference X is 0. If the result in step S21 is judged to be "Yes", a distance d between the tip of the welding wire 8 and the next portion W2 to be welded of the work W has already become the optimum distance D in Fig. 7(e). Therefore, the control routine returns to step S7 in accordance with the program, and then, the welding operation in step S7 onward is repeated with respect to the portion W2 to be welded.

In contrast, if the result in step S21 is judged to be "No", the control routine proceeds to step S22 in accordance with the program, and then, it is judged whether or not the difference X is greater than 0. If the result in step S22 is judged to be "Yes", the control routine proceeds to step S23 in accordance with the program, and then, the motor 9 is rotated reversely. In consequence, the torch 3 is moved upward in Fig. 1. In next step S24, it is judged whether or not the torch 3 is moved by a quantity equivalent to the difference X. In judging, the movement quantity may be replaced by an operating quantity of the motor 9.

When the movement quantity of the torch 3 reaches the quantity equivalent to the difference X, the control routine proceeds from step S24 to step S25 in accordance with the program, and then, the motor 9 is stopped. As a result, the distance d between the tip of the welding wire 8 and the next portion W2 to be welded of the work W (see Fig. 7(e)) is set to the optimum distance D. After the control in step S25 comes to an end, the control routine returns to step S7 in accordance with the program. The welding operation in step S7 onward is repeated with respect to the portion W2 to be welded.

If the result in step S22 is judged to be "No", the control routine proceeds to step S26 in accordance with the program, and then, the motor 9 is rotated forward. In consequence, the torch 3 is moved downward in Fig. 1. In next step S27, it is judged whether or not the torch 3 is moved by a quantity equivalent to an absolute value of the difference X. In judging, the movement quantity may be replaced by the operating quantity of the motor 9.

When the movement quantity of the torch 3 reaches the quantity equivalent to the absolute value of the difference X, the control routine proceeds from step S27 to step S28 in accordance with the program, and then, the motor 9 is stopped. As a result, the distance d between the tip of the welding wire 8 and the next portion W2 to be welded of the work W (see Fig. 7(e)) is set to the optimum distance D. After the control in step S28 comes to an end, the control routine returns to step S7 in accordance with the program. The welding operation in step S7 onward is repeated with respect to the portion W2 to be welded.

As described above, since in the present embodiment, the power source 5 is temporarily turned off in step S16, the tip of the welding wire 8 hardly bursts when it is separated from the work W, and as a result, the spatters are hardly generated on the work W. Consequently, in the present embodiment, even if no expensive argon gas for suppressing the spatters is mixed with carbonic acid gas which is sprayed toward the work W, or even if the use quantity (the spraying quantity) of such carbonic acid gas per se is reduced, the welding excellent in the finished quality can be achieved at a low cost, unlike in the conventional arc welding method.

Furthermore, in the present embodiment, the correction value L is calculated based on the minimum Rmin of the electric resistance R during the contact between the welding wire 8 and the work W, and accordingly, the torch 3 is moved in such a manner as to achieve the optimum distance D between the welding wire 8 and the portion to be welded on the work W. Here, the electric resistance R can be obtained in the more stable state in comparison with the voltage or current value during the contact between the welding wire 8 and the work W, thereby obtaining the minimum Rmin with accuracy. Consequently, the torch 3 can precisely move the welding wire 8 in the vertical direction in such a manner as to provide the optimum distance D. Therefore, in the above-described gas-metal arc welding device 1, it is possible to automatically move the welding wire 8 in such a manner as to secure the optimum distance D in conformity of the shape (e.g., an undulation) of the portion to be welded of the work W, and thus, to stably subject the work W to the welding of an excellent finished quality.

Incidentally, although in the above-described embodiment, the elapsed time t1 to be judged in step S15 is set as described above, the present invention is not limited to this. The elapsed time t1 may be arbitrarily set within the range of the time required after the minimum Rmin of the electric resistance R is detected until the time immediately before the welding wire 8 is separated from the work W (that is, the time when the necking of the welding wire 8 is sufficiently generated).

Additionally, although in the above-described embodiment, the timing when the application of the voltage between the welding wire 8 and the work W is temporarily stopped is determined based on the elapsed time (e.g., the above-described elapsed time t1) after the time when the minimum Rmin is detected, this timing may be determined based on another criterion. For example, the measurement (calculation) of the electric resistance R between the welding wire 8 and the work W is continued also after the minimum Rmin is detected, and then, the application of the voltage may be temporarily stopped as soon as the electric resistance R is increased up to a predetermined value, i.e., a predetermined value between the minimum Rmin and the maximum Rmax experimentally determined and stored in advance.

The predetermined electric resistance described here should be normally an electric resistance obtained by adding the electric resistance of 10% or more and 98% or less, preferably, 50% or more and 97% or less, more preferably, 75% or more and 95% or less of the difference between the minimum Rmin and the maximum Rmax to the minimum Rmin. If the application of the voltage is temporarily stopped before the electric resistance reaches the predetermined value, it becomes possibly difficult that the welding wire 8 is smoothly separated from the work W, resulting in a danger of degradation of the finished quality of the welding, although the generation of the spatters can be suppressed.

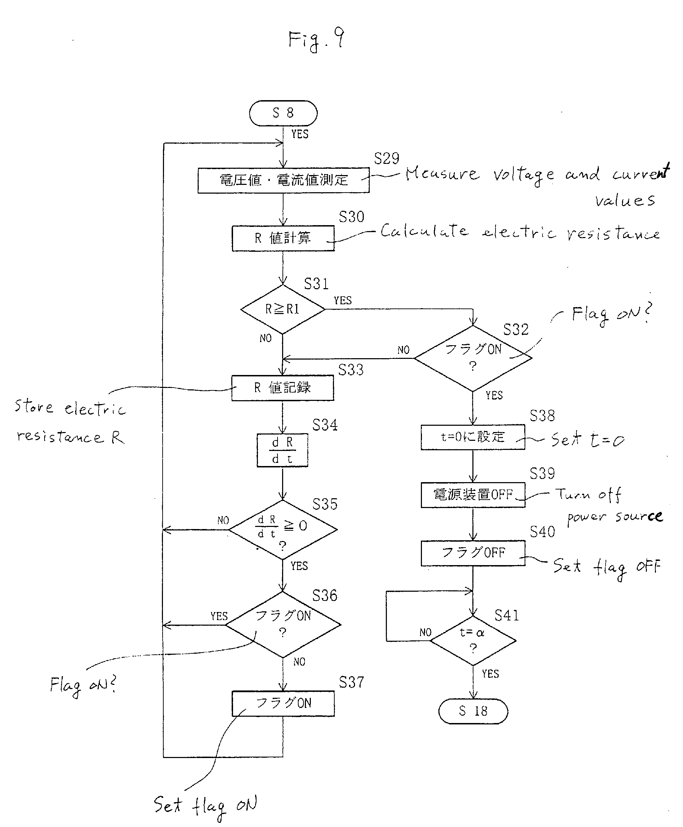

Referring to Fig. 9, explanation will be specifically made on operation in the case where the application of the voltage is temporarily stopped with the criterion of the above-described predetermined electric resistance. In this modification, part of the control flowchart in the above-described embodiment, that is, the control routine from step S8 to step S18 is modified to step S29 to step S41 as illustrated in Fig. 9. The operation in the modification will be explained hereafter in reference to Fig. 9. Here, the controller 7 previously stores therein the above-described predetermined electric resistance (hereinafter referred to as "an electric resistance R1").

In the same manner as in the above-described embodiment, the control routine reaches step S8 in accordance with the program. In step S8, upon confirmation of the electric conduction between the welding wire 8 and the work W, the voltage and current values of the current flowing between the welding wire 8 and the work W are started to be measured in next step S29. Here, the voltage and current values are measured in a manner similar to the above-described embodiment.

Next, in step S30, the electric resistance R between the welding wire 8 and the work W is calculated based on the measured voltage and current values. In next step S31, it is judged whether or not the calculated electric resistance R is the predetermined electric resistance R1 or higher. If the electric resistance R exceeds the predetermined electric resistance R1, the control routine proceeds to step S32 in accordance with the program, and then, it is judged whether or not a specific flag inside the CPU 10 is ON. Unless the flag is ON, the electric resistance R calculated in step S30 is stored in accordance with the program (step S33). Furthermore, in step S34, the electric resistance R is differentiated with a time. In next step S35, it is judged whether or not the differential value of the electric resistance R is 0 or more (i.e., a positive value). If the result in step S35 is judged to be "No", the control routine returns to step S29 in accordance with the program, and thereafter, the control routine from step S29 to step S35 is repeated until the result in step S35 is judged to be "Yes". During such repeated operation, the electric resistance R between the welding wire 8 and the work W is continuously calculated, and finally, the latest electric resistance R is stored in step S33. Incidentally, the electric resistance R is varied in the same manner as that in the above-described embodiment.

If the result in step S35 is judged to be "Yes", that is, if the minimum Rmin of the electric resistance R is detected (the minimum Rmin is recorded in RAM 11 in step S33, and further, is independently stored in the RAM 11 for the prevention of erasure), the control routine proceeds to step S36 in accordance with the program, and then, it is judged whether or not the above-described specific flag is ON. If the flag is ON, the control routine returns to step S29 in accordance with the program, and thus, the control routine from step 29 to S36 is repeated. In contrast, unless the flag is ON, the specific flag inside the CPU 10 (this is the flag to be judged in step S32 and S36) is set ON in step S37 in accordance with the program, and thereafter, the control routine returns to step S29.

In this series of operations, the electric resistance R is increased up to the above-described predetermined electric resistance R1 through the minimum Rmin, the result in step S32 is judged to be "Yes" in accordance with the program, and then, the control routine proceeds to step S38. In step S38, a time (t) at that time is set to 0 by the inside timer in the controller 7. Subsequently, in step S39, the power source 5 is turned off. Consequently, the application of the voltage between the welding wire 8 and the work W is stopped, and the tip of the welding wire 8 can be prevented from bursting when the welding wire 8 is separated from the work W (that is, in the state illustrated in Fig. 7(d)). As a result, molten particles from the welding wire 8 are hardly expelled over the work W, so that spatters are hardly generated. Even if the power source 5 is turned off as described above, the tip of the welding wire 8 is being molten by residual heat, and therefore, it can be naturally separated from the work W as the work W is moved by the carrier 2.

After step S39, the above-described specific flag is set to OFF in step S40 in accordance with the program, and subsequently, the inside timer is set to 0 in step S38. Thereafter, it is judged in step S41 whether or not a time $\alpha$ is elapsed, that is, whether or not the time t becomes $\alpha$. Here, $\alpha$ is normally about 0.25 ms. If the result in step S41 is judged to be "Yes", the control routine proceeds to step S18 in the same manner as in the above-described embodiment, and then, the power source 5 is turned on again. Thereafter, the same operation as that in the above-described embodiment is performed.

The scope of the present invention is shown by the appended claims rather than restricted by the description of the specification. Furthermore, all modifications or changes which come within the range of equivalency of the claims are intended to be encompassed in the present invention.

**Claims**

1. An arc welding method for subjecting a work (W) to welding by the use of a welding wire (8), the arc welding method comprising the steps of:

   measuring a voltage value and a current value between the welding wire (8) and the work (W) are measured, obtaining an electric resistance between the welding wire (8) and the work (W) based on the voltage value and the current value; bringing the welding wire (8) into contact with the work (W) while applying a voltage between the welding wire (8) and the work (W), thereby causing the end of the welding wire (8) to be fixingly welded to the work (W); obtaining an electric resistance between the welding wire (8) and the work (W) during the contact between the welding wire (8) and the work (W) so as to detect a minimum of the electric resistances ; **characterized by**
   significantly reducing the welding current by stopping, during a defined time period ($\alpha$), the application of the voltage between the welding wire (8) and the work (W) after the detection of the minimum of the electric resistance.

2. The are welding method according to claim 1, wherein the application of the voltage between the welding wire (8) and the work (W) is temporarily stopped when a predetermined time is elapsed after the minimum is detected.

3. The arc welding method according to claim 2, wherein the predetermined time is a time required such that the electric resistance between the welding wire (8) and the work (W) reaches an electric resistance obtained by adding an electric resistance of 10% or more and 98% or less of a difference between a previously obtained maximum of the electric resistance between the welding wire (8) and the work (W) and the minimum to the minimum.

4. The arc welding method according to claim 2, wherein the predetermined time is 0.5 ms.

5. The arc welding method according to claim 1, wherein the application of the voltage between the welding wire (8) and the work (W) is temporarily stopped when the electric resistance between the welding wire and the work is increased up to a predetermined electric resistance after the minimum is detected.

6. The arc welding method according to claim 5, wherein the predetermined electric resistance is an electric resistance obtained by adding an electric resistance of 10% or more and 98% or less of a difference between a previously obtained maximum of the electric resistance between the welding wire (8) and the work (W) and the minimum to the minimum

7. The arc welding method according to claim 1, wherein the time when the application of the voltage between the welding wire and the work is temporarily stopped is 0.25 ms.

8. An arc welding device (1) for subjecting a work (W) to welding by the use of a welding wire (8), the arc welding device (1) comprising:

mean (19,16) for measuring current and voltage ;
a controller (7) for obtaining resistance based on the voltage value and the current value measured by means (19, 16) comprising means (3,9) for moving the welding wire (8) in such a manner as to bring the wire (8) into contact with the work (W); and means for obtaining an electric resistance between the welding wire (8) and the work (W) during the contact between the welding wire (8) and the work, so as to detect a minimum of the electric resistance;
means (5) for applying a voltage between the welding wire (8) and the work (W);

**characterized in that**
the controller (7) is further arranged for temporarily stopping, during a defined time period ($\alpha$), the application of the voltage between the welding wire (8) and the work (W) after the detection of the minimum of the electric resistance.

**Patentansprüche**

1. Lichtbogenschweißverfahren, mit dem ein Werkstück (W) mit Hilfe eines Schweißdrahtes (8) Schweißen unterzogen wird, wobei das Lichtbogenschweißverfahren die folgenden Schritte umfasst:

Messen eines Spannungswertes und eines Stromwertes zwischen dem Schweißdraht (8) und dem Werkstück (W),
Erhalten eines elektrischen Widerstands zwischen dem Schweißdraht (8) und dem Werkstück auf Basis des Spannungswertes und des Stromwertes,
Inkontaktbringen des Schweißdrahtes (8) mit dem Werkstück (W), während zwischen dem Schweißdraht (8) und dem Werkstück (W) eine Spannung angelegt wird, wodurch bewirkt wird, dass das Ende des Schweißdrahtes (8) fest an das Werkstück (W) geschweißt wird, und
Erhalten eines elektrischen Widerstands zwischen dem Schweißdraht (8) und dem Werkstück (W) während des Kontakts zwischen dem Schweißdraht (8) und dem Werkstück (W), um ein Minimum des elektrischen Widerstands zu detektieren, und **gekennzeichnet ist durch**
signifikantes Reduzieren des Schweißstromes **durch** Unterbrechen des Anlegens der Spannung zwischen dem Schweißdraht (8) und dem Werkstück (W) während eines vorgegebenen Zeitraums ($\alpha$), nach dem Detektieren des Minimums des elektrischen Widerstands.

**2.** Lichtbogenschweißverfahren nach Anspruch 1, wobei das Anlegen der Spannung zwischen dem Schweißdraht (8) und dem Werkstück (W) zeitweilig unterbrochen wird, wenn eine vorgegebene Zeit abgelaufen ist, nachdem das Minimum detektiert ist.

**3.** Lichtbogenschweißverfahren nach Anspruch 2, wobei die vorgegebene Zeit eine Zeit ist, die erforderlich ist, damit der elektrische Widerstand zwischen dem Schweißdraht (8) und dem Werkstück (W) einen elektrischen Widerstand erreicht, der durch Hinzufügen eines elektrischen Widerstands von 10% oder mehr und von 98% oder weniger einer Differenz zwischen einem zuvor erhaltenen Maximum des elektrischen Widerstands zwischen dem Schweißdraht (8) und dem Werkstück (W) und dem Minimum zu dem Minimum erhalten wird.

**4.** Lichtbogenschweißverfahren nach Anspruch 2, wobei die vorgegebene Zeit 0,5 ms ist.

**5.** Lichtbogenschweißverfahren nach Anspruch 1, wobei das Anlegen von Spannung zwischen dem Schweißdraht (8) und dem Werkstück (W) zeitweilig unterbrochen wird, wenn der elektrische Widerstand zwischen dem Schweißdraht und dem Werkstück bis auf einen vorgegebenen elektrischen Widerstand erhöht ist, nachdem das Minimum detektiert ist.

**6.** Lichtbogenschweißverfahren nach Anspruch 5, wobei der vorgegebene elektrische Widerstand ein elektrischer Widerstand ist, der durch Hinzufügen eines elektrischen Widerstands von 10% oder mehr und von 98% oder weniger einer Differenz zwischen einem zuvor erhaltenen Maximum des elektrischen Widerstands zwischen dem Schweißdraht (8) und dem Werkstück (W) und dem Minimum zu dem Minimum erhalten wird.

**7.** Lichtbogenschweißverfahren nach Anspruch 1, wobei die Zeit, in der das Anlegen der Spannung zwischen dem Schweißdraht (8) und dem Werkstück (W) zeitweilig unterbrochen wird, 0,25 ms ist.

**8.** Lichtbogenschweißvorrichtung (1), mit der ein Werkstück (W) mit Hilfe eines Schweißdrahtes (8) Schweißen unterzogen wird, wobei die Lichtbogenschweißvorrichtung (1) umfasst:

Mittel (19, 16) zum Messen von Strom und Spannung,
einen Kontroller (7) zum Erhalten eines Widerstands auf Basis des Spannungswertes und des Stromwertes, gemessen durch die Mittel (19, 16), umfassend Mittel (3, 9) zum Bewegen des Schweißdrahtes (8) in einer solchen Art und Weise, um den Draht (8) in Kontakt mit dem Werkstück (W) zu bringen, und Mittel zum Erhalten eines elektrischen Widerstands zwischen dem Schweißdraht (8) und dem Werkstück (W), während des Kontakts zwischen dem Schweißdraht (8) und dem Werkstück (W), um ein Minimum des elektrischen Widerstands zu detektieren, und
Mittel (5) zum Anlegen einer Spannung zwischen dem Schweißdraht (8) und dem Werkstück (W),
und **dadurch gekennzeichnet ist, dass**
der Kontroller (7) des Weiteren eingerichtet ist, um das Anlegen der Spannung zwischen dem Schweißdraht (8) und dem Werkstück (W) nach dem Detektieren des Minimums des elektrischen Widerstands während eines vorgegebenen Zeitraums ($\alpha$) zeitweilig zu unterbrechen.

**Revendications**

**1.** Procédé de soudage à l'arc pour exposer une pièce (W) au soudage en utilisant une baguette de soudage (8), le procédé de soudage à l'arc comprenant les étapes consistant à :

- mesurer une valeur de tension et une valeur de courant entre la baguette de soudage (8) et la pièce (W) ;
- obtenir une résistance électrique entre la baguette de soudage (8) et la pièce (W) sur la base de la valeur de tension et de la valeur de courant ;
- amener la baguette de soudage (8) en contact avec la pièce tout en appliquant une tension entre la baguette de soudage (8) et la pièce (W) ce qui conduit à souder l'extrémité de la baguette de soudage (8) de manière fixe à la pièce (W) ;
- obtenir une résistance électrique entre la baguette de soudage (8) et la pièce (W) au cours du contact entre la baguette de soudage (8) et la pièce (W), afin de détecter une valeur minimale de la résistance électrique ;

**caractérisé par** une réduction significative du courant de soudage en arrêtant, au cours d'une période de temps définie (a), l'application de la tension entre la baguette de soudage (8) et la pièce (W) après la détection de la valeur minimale de la résistance électrique.

**2.** Procédé de soudage à l'arc selon la revendication 1, dans lequel l'application de la tension entre la baguette de soudage (8) et la pièce (W) est temporairement arrêtée quand un temps prédéterminé s'est écoulé après détection de la valeur minimale.

**3.** Procédé de soudage à l'arc selon la revendication 2, dans lequel le temps prédéterminé est un temps requis afin que la résistance électrique entre la baguette de soudage (8) et la pièce (W) atteigne une résistance électrique obtenue en ajoutant une résistance électrique de 10% ou plus et de 98% ou moins d'une différence entre une valeur maximale précédemment obtenue de la résistance électrique entre la baguette de soudage (8) et la pièce (W) et la valeur minimale à la valeur minimale.

**4.** Procédé de soudage à l'arc selon la revendication 2, dans lequel le temps prédéterminé est égal à 0,5 ms.

**5.** Procédé de soudage à l'arc selon la revendication 1, dans lequel l'application de la tension entre la baguette de soudage (8) et la pièce (W) est temporairement arrêtée quand la résistance électrique entre la baguette de soudage et la pièce est augmentée jusqu'à une résistance électrique après détection de la valeur minimale.

**6.** Procédé de soudage à l'arc selon la revendication 5, dans lequel la résistance électrique est une résistance électrique obtenue en ajoutant une résistance électrique de 10% ou plus et 98% ou moins d'une différence entre une valeur maximale précédemment obtenue de la résistance électrique entre la baguette de soudage (8) et la pièce (W) et la valeur minimale à la valeur minimale.

**7.** Procédé de soudage à l'arc selon la revendication 1, dans lequel la durée pendant laquelle l'application de la tension entre la baguette de soudage (8) et la pièce (W) est temporairement arrêtée est égale à 0,25 ms.

**8.** Appareil de soudage à l'arc (1) pour soumettre une pièce (W) au soudage en utilisant une baguette de soudage (8), l'appareil de soudage à l'arc (1) comprenant :

des moyens (19, 16) pour mesurer le courant et la tension ;
une unité de commande (7) permettant d'obtenir une résistance basée sur la valeur de tension et la valeur de courant, mesurée par les moyens (19, 16), comprenant
des moyens (3, 9) pour déplacer la baguette de soudage (8) de façon à amener la baguette (8) en contact avec la pièce (W) et des moyens pour obtenir une résistance électrique entre la baguette de soudage (8) et la pièce (W) au cours du contact entre la baguette de soudage (8) et la pièce afin de détecter une valeur minimale de la résistance électrique ;
des moyens (5) pour appliquer une tension entre la baguette de soudage (8) et la pièce (W) ;

**caractérisé en ce que** :

l'unité de commande (7) est en outre agencée pour arrêter temporairement au cours d'une période de temps définie (α) l'application de la tension entre la baguette de soudage (8) et la pièce (W) après détection de la valeur minimale de la résistance électrique.

Fig. 1

Fig. 2

A/D Converter for voltage

CPU — 10

7

11 — RAM ⟺ ROM — 12

Power source

16  14
電圧用Ａ／Ｄ変換器

19
電流用Ａ／Ｄ変換器

15
その他の入力装置

入出力ポート

電源装置 — 5

モーター — 9
Mo

その他の装置

Other input devices

13

Other devices

A/D Converter for current

Input/Output port

Fig. 3

```
                  ┌─────────────┐
                  │  スタート   ├── Start
                  └──────┬──────┘
                         │
                         │         ── Initialize
                  ┌──────┴──────┐
                  │  初期設定   │ S 1
                  └──────┬──────┘
        ┌────────────────┤
        │                │         ── Input predetermined value?
        │            ╱───┴───╲
   No   │          ╱  所定値入力 ╲
   ◄────┤         ╲     ？      ╱  S 2
        │          ╲───┬───╱
        │              │ Yes      ── Store predetermined value
        │       ┌──────┴──────┐
        │       │  所定値記録 │ S 3
        │       └──────┬──────┘
        │              │
        │ ┌────────────┤
        │ │            │          ── Input distance D?
        │ │        ╱───┴───╲
   No   │ │      ╱          ╲
   ◄────┼─┤     ╲  D値入力？ ╱  S 4
        │ │      ╲───┬───╱
        │ │          │ Yes        ── Store distance D
        │ │   ┌──────┴──────┐
        │ │   │  D値記録   │ S 5
        │ │   └──────┬──────┘
        │ │          │
        │ │ ┌────────┤
        │ │ │        │            ── Starting command?
        │ │ │    ╱───┴───╲
   No   │ │ │  ╱          ╲
   ◄────┼─┼─┤ ╲ 開始命令？ ╱  S 6
          │ │  ╲───┬───╱
              │    │ Yes
              │    │        ┌───┐
              │    ├────────┤ 4 │
              │  ┌─┴─┐      └───┘
              │  │ 1 │
              │  └───┘
```

Fig. 4

Rotate motor forward

モーター正転　S7

Electric condu tion?

導通?　S8

No

Yes — Measure voltage and current values

電圧値・電流値測定　S9

R値計算　S10 — Cal late electric resistance R

R値記録　S11 — Store electric resistance R

$$\frac{dR}{dt}$$　S12

No

$$\frac{dR}{dt} \geqq 0$$　S13
?

Yes

Fig. 5

②   — Set t=0

| t ＝ 0 に設定 | S14 |

No    ◇ t ＝ t₁ ? ◇    S15

Yes    — Turn off power source

| 電源装置ＯＦＦ | S16 |

No    ◇ t ＝ t₁ ＋ α ? ◇    S17

Yes    — Turn on power source

| 電源装置ＯＮ | S18 |

| 補正値Ｌ計算 | S19 |    — Calculate correction value L

| Ｄ － Ｌ ＝ Ｘ | S20 |

③

Fig. 6

Rotate motor forward

Rotate motor reversely

3

Yes — X = 0 ? — S21 — 4

No

X > 0 ? — S22

Yes

No

S26 — モーター正転

S23 — モーター逆転

S27 — トーチの移動量＝|X| ?

S24 — トーチの移動量＝X ?

No

No

Yes

Yes

S28 — モーター停止

S25 — モーター停止

4

4

Movement quantity of Torch = |X| ?

Movement quantity of torch = X

Stop motor

Stop motor

# Fig. 7

(a)

(b)

(c)

(d)

(e)

Fig. 8

Fig. 9

S 8
YES

電圧値・電流値測定 S29 — Measure voltage and current values

R 値計算 S30 — Calculate electric resistance

S31
R ≧ R1 — YES

S32 — Flag ON?
フラグON ?
NO

Store electric resistance R — R 値記録 S33

$\frac{dR}{dt}$ S34

S35
$\frac{dR}{dt} \geqq 0$ ? — NO

S36
フラグON ? — YES
Flag ON?

フラグON S37
Set flag ON

t=0に設定 S38 — Set t=0

電源装置OFF S39 — Turn off power source

フラグOFF S40 — Set flag OFF

S41
t= α ? — NO

S 18

YES

**EP 1 224 995 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 59202176 A

- JP 57081964 A